# EUROPEAN PATENT SPECIFICATION

(11) **EP 0 515 155 B1**
(45) Date of publication and mention of the grant of the patent: **28.07.1999**
(21) Application number: 92304549.6
(22) Date of filing: 20.05.1992
(51) Int. Cl.: H04N 7/01

(54) **Scanning rate conversion**
Abtastratenumwandlung
Conversion du rythme de balayage

(30) Priority: 21.05.1991 JP 14407791; 21.05.1991 JP 14407591; 21.05.1991 JP 14407691
(43) Date of publication of application: 25.11.1992
(73) Proprietor: SONY CORPORATION, Tokyo 141 (JP)
(72) Inventor: Suzuki, Yoshinori, c/o Patents Division, Shinagawa-ku, Tokyo 141 (JP)
(74) Representative: Williams, Janice

(56) References cited:
- EP-A- 0 120 696
- EP-A- 0 424 654
- GB-A- 2 135 850
- US-A- 4 774 599
- PATENT ABSTRACTS OF JAPAN vol. 6, no. 16 (E-92)29 January 1982 & JP-A-56 138 376 (NHK) 28 October 1981
- PATENT ABSTRACTS OF JAPAN vol. 12, no. 385 (E-668)14 October 1988 & JP-A-63 128 881 (HITACHI MEDICAL CORP.) 1 June 1988

## Description

This invention relates to scanning rate conversion of television signals, and more particularly to scanning rate conversion to generate a television signal of a reference frequency from a high speed television signal having a frequency which is N times greater than the reference frequency.

For a television signal of the standard television system, a scanning period of one frame is prescribed. In the case of the NTSC system, for example, since the field frequency is 60 Hz, it is not possible to capture motion of a higher frequency than 60 Hz with an NTSC television camera. In view of this, JP-A-59 175292, for example, discloses a high speed actual or real image recorder in which a television camera having a scanning rate N times greater than that of the standard television system is used to pick up an object image for recording, in a multi channel form, by a video tape recorder.

In order to monitor, using an image monitor, an image pickup output of a television camera having an N-tuple scanning rate used in such a high speed actual or real image recorder, it is necessary to use a special image monitor of the N-tuple scanning rate type, or to use a scanning rate (speed) converter for converting the scanning rate of the output of the television camera to that of the standard television system.

The television camera is arranged to carry out an imaging operation synchronous with a reference television signal for external synchronisation. With a television camera of the N-tuple scanning rate type, an N-tuple scanning rate television signal is generated with the reference television signal used as a reference. A scanning rate converter arranged for converting the scanning rate of the image pickup output of such a television camera to the scanning rate of the standard television system requires a reference television signal of the basic (standard) scanning rate. For this reason, an input terminal for a high speed television signal of the N-tuple scanning rate and an input terminal for a reference television signal of the basic scanning rate must be juxtaposed. This has the disadvantage that an increased number of external connection terminals is required.

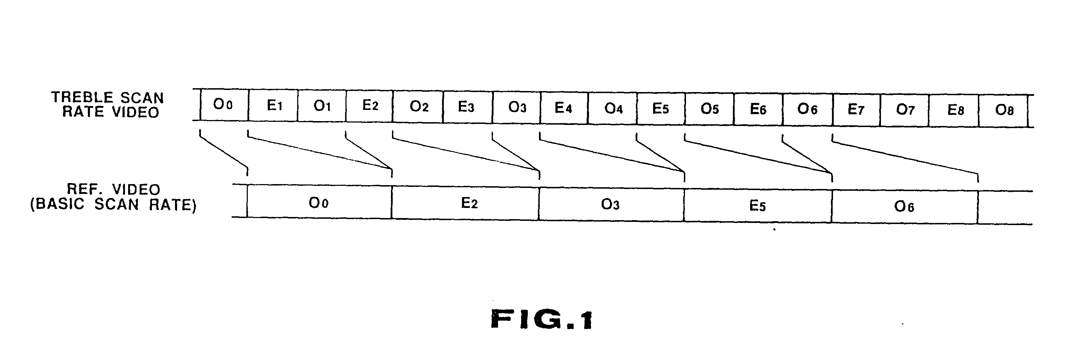

Further, when converting the scanning rate of the image pickup output of a television camera of the N-tuple scanning rate type to the standard scanning rate, a scheme as shown in Figure 1 of the accompanying drawings might be employed. In this example, the time base of the image pickup output of a television camera of the treble scanning rate type is expanded by a factor of three, every third field of the output being used as a video field of a television signal of the standard television system. However, the time difference between the resulting fields corresponds to a time period of three fields of the television signal of the treble scanning rate. This can cause the problem of "step-like" motion in the resulting moving picture, or motion which does not appear smooth.

In view of the above, it would be desirable to provide a scanning rate converter for a television signal which is capable of converting the scanning rate of an image pickup output of a television camera of the N-tuple scanning rate type to the scanning rate of a standard television system without requiring both an input terminal for the high speed television signal and an input terminal for a reference television signal for external synchronisation.

It would also be desirable to provide a scanning rate converter for a television signal which is capable of converting a high speed television signal of an N-tuple scanning rate type to a television signal of a basic, or reference, scanning rate while providing smooth motion portrayal.

EP-A-0 120 696, patent family member of JP-A-59 175 292, discloses apparatus for recording a video signal obtained from a high speed scanning video camera and which performs a conversion method in accordance with the precharacterising portion of claim 1.

GB-A-2 135 850 discloses a circuit for reducing flicker on display of a television signal in which picture information is repeated in pairs of two consecutive field periods. For alternate field periods, a mean picture signal is produced from picture information in different pairs.

US-A-4 774 599 discloses a video recording system in which a high field frequency signal is converted to a lower field frequency signal by selecting odd and even fields of the high frequency signal which are positioned across the boundary between adjacent fields of the lower frequency signal.

EP-A-0 424 654 discloses a system for generation and evaluation of a television signal having an identification signal for the picture aspect ratio inserted therein.

According to one aspect of the invention there is provided a method of converting a high speed television signal having a field frequency N (where N is an integer) times greater than that of a standard television signal, the method comprising:
controlling write and read operations of a memory to select odd fields and even fields of the high speed television signal corresponding to respective intervals of even fields and odd fields of said standard television signal, the total number of odd fields and even fields of the high speed television signal corresponding to each said interval being equal to N, and to expand the time base of the selected even fields and odd fields of said high speed television signal to generate a television signal having the field frequency of said standard television signal;
characterised by:
detecting a marker signal (SCAN ID) generated at the field frequency of the standard television signal and inserted in the high speed television signal; and
generating memory control signals on the basis of the detected marker signal to control said write and read operations of the memory.

According to another aspect of the invention there is provided a scanning rate converter for converting a high speed television signal having a field frequency N (where N is an integer) times greater than that of a standard television signal, the scanning rate converter comprising:
a memory; and
a memory controller for controlling write and read operations of the memory to select odd fields and even fields of the high speed television signal corresponding to respective intervals of even fields and odd fields of said standard television signal, the total number of odd fields and even fields of the high speed television signal corresponding to each said interval being equal to N, and to expand the time base of the selected even fields and odd fields of said high speed television signal to generate a television signal having the field frequency of said standard television signal;
characterised by means for detecting a marker signal (SCAN ID) generated at the field frequency of the standard television signal and inserted in the high speed television signal, wherein the memory controller is arranged to generate memory control signals on the basis of the detected marker signal to control said write and read operations of the memory.

The marker signal may have a white level of 100%. Further, this marker signal may be inserted at a position corresponding to a vertical retrace interval of the standard television signal. Here, it is preferable from a practical point of view that N is equal to 3.

In another embodiment, N is an odd number and the selected odd fields and even fields are positioned across the boundary between the even fields and odd fields of said standard television signal.

An embodiment of the invention will now be described, by way of example, with reference to the accompanying drawings in which:
Figure 1 is a timing chart for explaining a problem of the known approach of using every third field of the image pickup output of a television camera of the treble scanning rate type as a video field of a standard television signal;
Figure 2 is a block diagram showing a first scanning rate converter which uses a standard television signal as a reference for the conversion process;

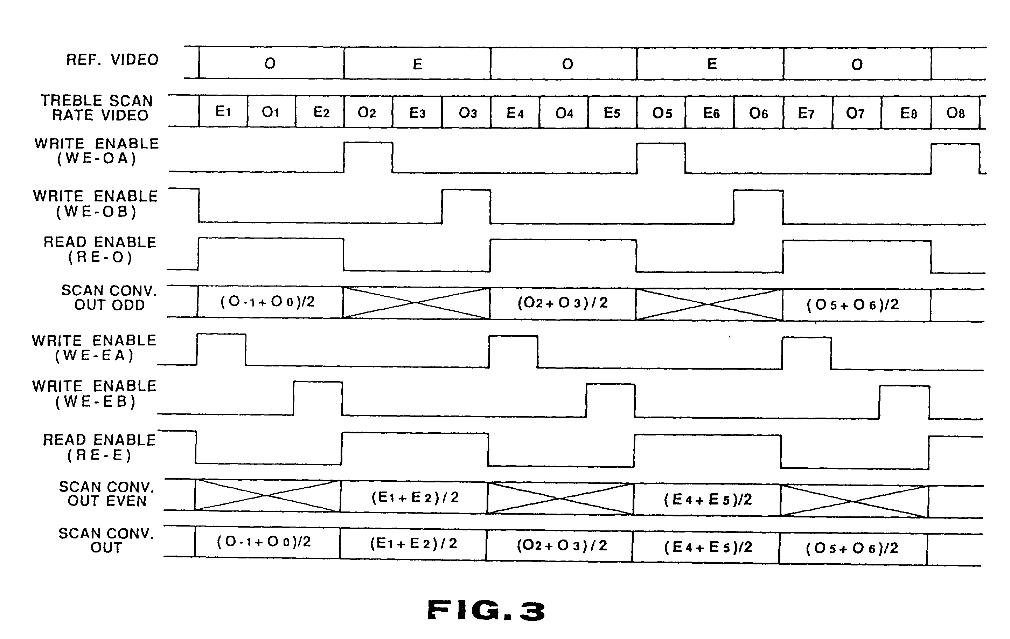

Figure 3 is a timing chart showing the operation of the scanning rate converter shown in Figure 2;
Figure 4 is a waveform diagram showing, on an enlarged scale, synchronous waveforms in the vicinity of the vertical synchronisation portion of television signals of the basis scanning rate and the treble scanning rate handled in a scanning rate converter of the NTSC system;
Figure 5 is a waveform showing, on an enlarged scale, synchronous waveforms in the vicinity of the vertical synchronisation portion of television signals of the basis scanning rate and the treble scanning rate handled in a scanning rate converter of the PAL system;
Figure 6 is a block diagram of a second scanning rate converter which uses a standard television signal as a reference for the conversion process but which implements a field frequency conversion method which can be applied in embodiments of the present invention;
Figure 7 is a timing chart showing the operation of the scanning rate converter of Figure 6;
Figure 8 is a block diagram of a scanning rate converter for a television signal embodying the invention;
Figure 9 is a timing chart showing the operation of the scanning rate converter of Figure 8;
Figure 10 is a timing chart showing the operation of a scanning rate converter of the NTSC system;
Figure 11 is a timing chart showing the operation of a scanning rate converter of the PAL system.

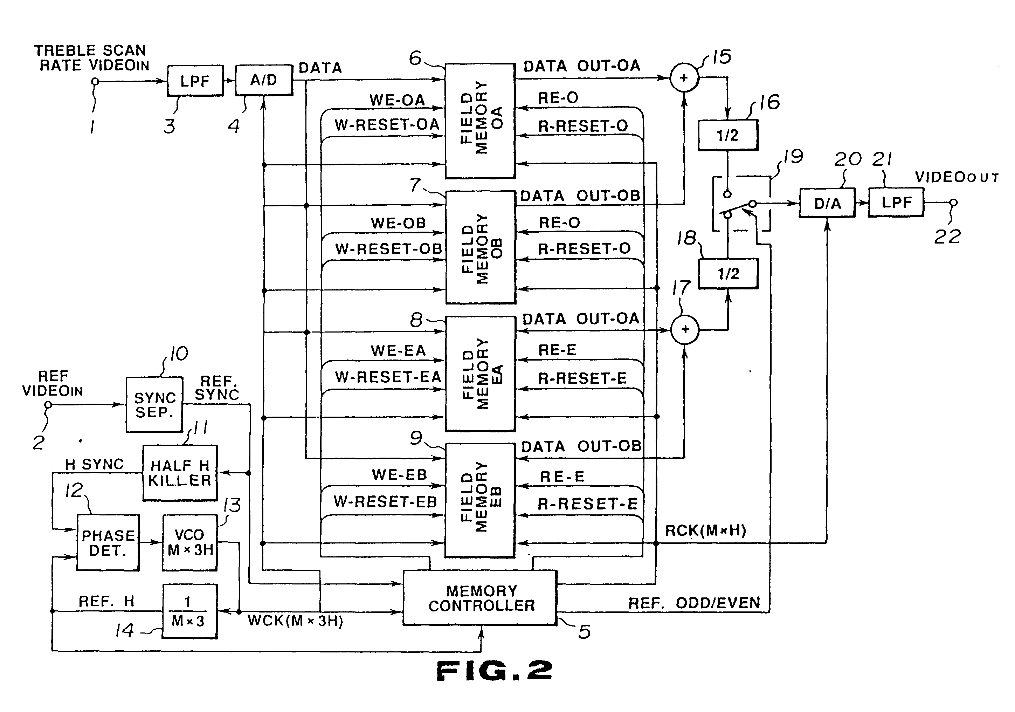

The scanning rate converter shown in Figure 2 is arranged to convert a television signal of the treble scanning rate, which is obtained as an image pickup output of a television camera of the treble scanning rate type, to a signal of the scanning rate of a standard television signal. The converter includes a first signal input terminal 1 supplied with a television signal (VIDEO_{IN}) of the treble scanning rate, and a second signal input terminal 2 supplied with a reference television signal (REF.VIDEO_{IN}) of the basic scanning rate.

In this scanning rate converter, the television signal (VIDEO_{IN}) of the treble scanning rate which is supplied to the first signal input terminal 1 is delivered to an analogue/digital (A/D) converter 4, which converts the signal to digital form, via a low-pass filter 3 for preventing aliasing distortion. Odd and even field data (DATA) of the television signal of the treble scanning rate digitized by the A/D converter 4 is written into odd field memories 6, 7 and even field memories 8, 9 under the control of write control and readout control signals supplied by a memory controller 5.

The reference television signal (REF.VIDEO_{IN}) of the basic scanning rate delivered to the second signal input terminal 2 is delivered to a synchronous separation circuit 10, which extracts a reference synchronising signal (REF.SYNC). The reference synchronising signal (REF.SYNC) is supplied to the memory controller 5, and is also supplied to a phase comparator 12 via a half H killer circuit 11. The phase comparator 12 is supplied with a signal (REF.H) obtained by frequency-dividing an oscillating output of a voltage controlled oscillator (VCO) 13 using a frequency divider 14, and serves to carry out phase comparison between the signal (REF.H) and a horizontal synchronising signal (HSYNC) delivered from the half H killer circuit 11 to control the oscillation phase of the VCO 13 by means of a phase comparison output. Here, the phase comparator 12, the VCO 13 and the frequency-divider 14 constitute a well known phase locked loop (PLL).

The VCO 13 oscillates at a frequency of 3xMxf_{H} where M represents the number of samples within one horizontal scanning period of the treble scanning rate television signal (VIDEO_{IN}), and f_{H} represents the horizontal scanning frequency. The frequency-divider 14 frequency-divides the oscillating output of the VCO 13 by (3xM) to form a signal (REF.H) of the horizontal scanning frequency f_{H}. The oscillating output of the VCO 13 is phase-locked to the horizontal synchronising signal HSYNC of the reference signal (REF.VIDEO_{IN}) by the operation of the PLL. The oscillating output, having the frequency of 3xMxf_{H}, obtained by the VCO 13 is supplied, as a write clock signal WCK, to the memory controller 5, the A/D converter 4, and the field memories 6. 7, 8, 9. Further, the signal (REF.H), of the horizontal frequency f_{H}, derived by the frequency-divider 14 is also delivered to the memory controller 5.

Here, 858 is adopted in the case of the NTSC system as the number of samples M within one horizontal scanning period of the treble scanning rate television signal (VIDEO_{IN}), and 864 is adopted in the case of the PAL system.

The memory controller 5 generates various control pulses (WE-OA, W-RESET-OA, WE-OB, W-RESET-OB, WE-EA, W-RESET-EA, WE-EB, W-RESET-EB) for write control, and various control pulses (RE-O, R-RESET-O, RE-E, R-RESET-E, RCK) for readout control of the field memories 6. 7, 8, 9, as shown in Figure 2, on the basis of the reference synchronising signal (REF.SYNC), the write clock (WCK) and the signal (REF.H) of the horizontal scanning frequency f_{H}.

The write enable pulses (WE-OA, WE-OB, WE-EA, WE-EB) of the various control pulses control a write operation of data. The write enable pulse (WE-OA) is placed in the state of logic "H" for a time period corresponding to odd fields (O₂, O₅, O₈...) of the treble scanning rate television signal (VIDEO) existing at the beginning of respective even fields E of the reference television signal (REF.VIDEO). By means of this write enable pulse (WE-OA), data of the odd fields (O₂, O₅, O₈...) of the treble scanning rate television signal (VIDEO) is written into the field memory 6. Further, the write enable pulse (WE-OB) is placed in the state of logic "H" for a time period corresponding to odd fields (O₃, O₆, O₉...) of the treble scanning rate television signal (VIDEO) existing at the ends of respective even fields E of the reference television signal (REF.VIDEO). By means of this write enable pulse (WE-OB), data of the odd fields (O₃, O₆, O₉ ...) of the treble scanning rate television signal (VIDEO) is written into the field memory 7. Further, the write enable pulse (WE-EA) is placed in the state of logic "H" for a time period corresponding to even fields (E₁, E₄, E₇...) of the treble scanning rate television signal (VIDEO) existing at the beginning of respective odd fields 0 of the reference television signal (REF.VIDEO). By means of this write enable pulse (WE-EA), data of even fields (E₁, E₄, E₇...) of the treble scanning rate television signal (VIDEO) is written into the field memory 8. Further, the write enable pulse (WE-EB) is placed in the state of logic "H" for a time period corresponding to even fields (E₂, E₅, E₈...) of the treble scanning rate television signal (VIDEO) existing at the ends of respective odd fields 0 of the reference television signal (REF.VIDEO). By means of this write enable pulse (WE-EB), data of the even fields (E₂, E₅, E₈...) of the treble scanning rate television signal (VIDEO) is written into the field memory 9. In addition, write reset pulses (W-RESET-OA, W-RESET-OB, W-RESET-EA, W-RESET-EB) of the various control pulses indicate leading positions of write addresses of data written by the write enable pulses (WE-O, WE-E).

Read enable pulses (RE-O, RE-E) of the various control pulses control readout of data. The read enable pulse (RE-O) is placed in the state of logic "H" corresponding to respective odd fields (0) of the reference television signal (REF.VIDEO). By means of this read enable pulse (RE-O). data (O₂, O₅, O₈...) of odd fields is read out from the field memory 6 with the time base being expanded, and data (O₃, O₆, O₉...) of odd fields is read out from the field memory 7 with the time base being expanded. Further, the read enable pulse (RE-E) is placed in the state of logic "H" for a time period corresponding to respective even fields (E) of the reference television signal (REF.VIDEO). By means of this read enable pulse (RE-E) , data (E₁, E₄, E₇ ... )of even fields is read out from the field memory 8 with the time base being expanded, and data (E₂, E₅, E₈...) of even fields is read out from the field memory 9 with the time base being expanded. Furthermore, read reset pulses (R-RESET-O, R-RESET-E) of the various control pulses indicate leading positions of readout addresses of the data read out by the read enable pulses (RE-O, RE-E). The readout clock (RCK) corresponds to 1/3 of the clock rate of the write clock (WCK).

For the duration of respective odd fields 0 of the reference television signal (REF.VIDEO), the data (O₂, O₅, O₈...) of odd fields read out from the odd field memory 6 with the time base expanded, and the data (O₃, O₆, O₉...) of odd fields read out from the field memory 7 with the time base expanded are added by an adder 15. The added data (O₂+O₃, O₅+O₆, O₈+O₉, ...) is delivered to a divider 16. The divider 16 divides the added data (O₂ +O₃, O₅+O₆, O₈+O₉, ...) from the adder 15 by "2" thereby to form field interpolation data {(O₂ +O₃)/2, (O₅+O₆)/2, (O₈+O₉)/2, ...}. This field interpolation data {(O₂+O₃)/2, (O₅+O₆)/2, (O₈+O₉)/2, ...} is delivered to a digital/analogue (D/A) converter 20 through a changeover switch 19 as scanning rate converted odd field data (CONV.OUT_{ODD}).

Similarly, for the duration of respective even fields E of the reference television signal (REF.VIDEO), data (E₁, E₄, E₇...) of even fields read out from the even field memory 8 with the time base expanded, and data (E₂, E₅, E₈...) of even fields read out from the field memory 9 with the time base expanded are added by an adder 17. The added data (E₁+E₂, E₄+E₅, E₇+E₈...) is delivered to a divider 18. The divider 18 divides the added data (E₁+E₂, E₄+E₅, E₇+E₈...) from the adder 17 by "2" thereby to form field interpolation data {(E₁+E₂)/2, (E₄+E₅)/2, (E₇+E₈)/2...}. The field interpolation data {(E₁+E₂)/2, (E₄+E₅)/2, (E₇+E₈)/2...} is delivered to the D/A converter 20 through the changeover switch 19 as scanning rate converted even field data (CONV.OUT_{EVEN}).

The D/A converter 20 converts the scanning rate converted odd field data (CONV.OUT_{ODD}) and the scanning rate converted even field data (CONV.OUT_{EVEN}) sequentially delivered through the changeover switch 19 to data in analogue form to provide an output scanning rate converted television signal (VIDEO_{OUT}) at an output terminal 22 via an interpolating low-pass filter 21.

Since the scanning rate converted television signal (VIDEO_{OUT}) provided at the output terminal 22 is a signal obtained by expanding the time base of the treble scanning rate television signal for implementation of field interpolating processing, the output is a television signal of the basis scanning rate in which movement or motion of a picture is smooth.

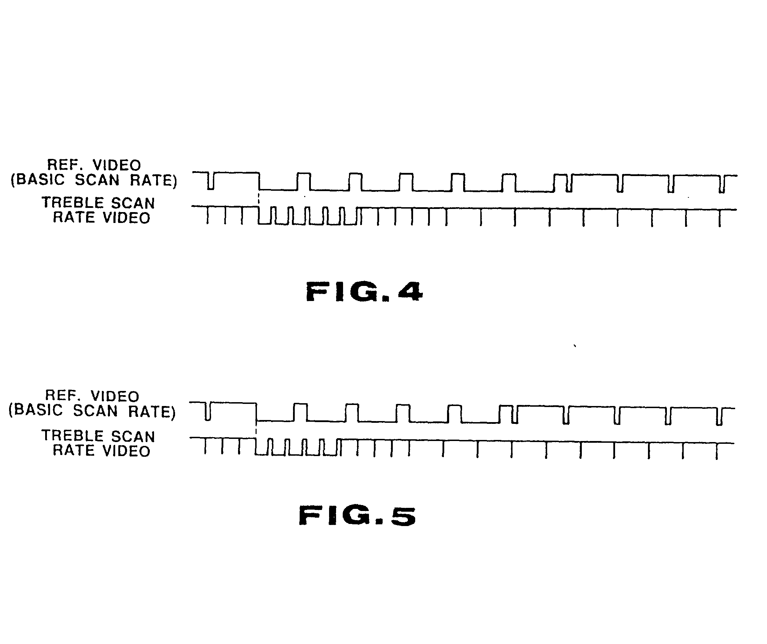

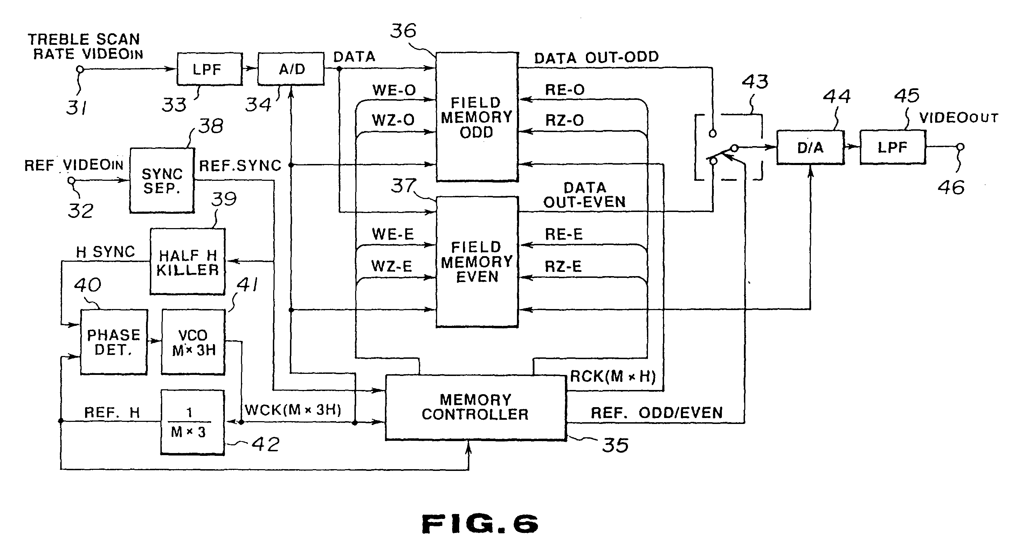

Synchronous waveforms in the vicinity of vertical synchronisation portions of television signals of the basic scanning rate and the treble scanning rate handled in the scanning rate converter of the NTSC system are shown in Figure 4. Synchronous waveforms in the vicinity of vertical synchronisation portions of television signals of the basic scanning rate and the treble scanning rate handled in the scanning rate converter of the PAL system are shown in Figure 5.

In the scanning rate converter constructed as above, field interpolated data {(O₂+O₃)/2, (O₅+O₆)/2, (O₈+O₉)/2, ...} obtained by expanding the time base of data of odd fields (O₂, O₃, O₅, O₆, O₈, O₉) of the treble scanning rate television signal existing for a time period of even fields E of the reference television signal (REF.VIDEO) provide scanning rate converted odd field data (CONV.OUT_{ODD}). This together with field interpolated data {(E₁+E₂)/2, (E₄+E₅)/2, (E₇+E₈)/2...} obtained by expanding the time base of data of even fields (E₁, E₂, E₄, E₅, E₇, E₈) of the treble scanning rate television signal (REF.VIDEO) existing for a time period of odd fields 0 of the reference signal (REF.VIDEO) provides a scanning rate converted television signal (VIDEO_{OUT}) . Accordingly, the memory capacity required for the field interpolation processing can be reduced if not minimised. In addition, this scanning rate converter can convert a high speed television signal to a basic scanning rate television signal preceding by 1/3 of the vertical synchronisation period at maximum with respect to vertical synchronisation of the reference television signal. Accordingly, in the case where such a high speed television signal is passed through a time base correction circuit in a video tape recorder, for example, it is possible to cope with delay by means of the time base correction circuit.

Thus, in the scanning rate converter described above, a technique is employed to expand the time base of all odd fields of a high speed television signal within even field intervals of a television signal of a reference frequency and to take an arithmetical mean thereof to generate a mean odd field signal, and to expand the time base of all even fields of the high speed television signal within odd field intervals of the television signal having the reference frequency and to take an arithmetical mean thereof to generate a mean even field signal, so that the mean odd field signal and the mean even field signal correspond with odd fields and even fields respectively of the television signal of the reference signal. Thus, it is possible to form from the high speed television signal a television signal of the reference frequency providing smooth movement or motion in the resulting picture.

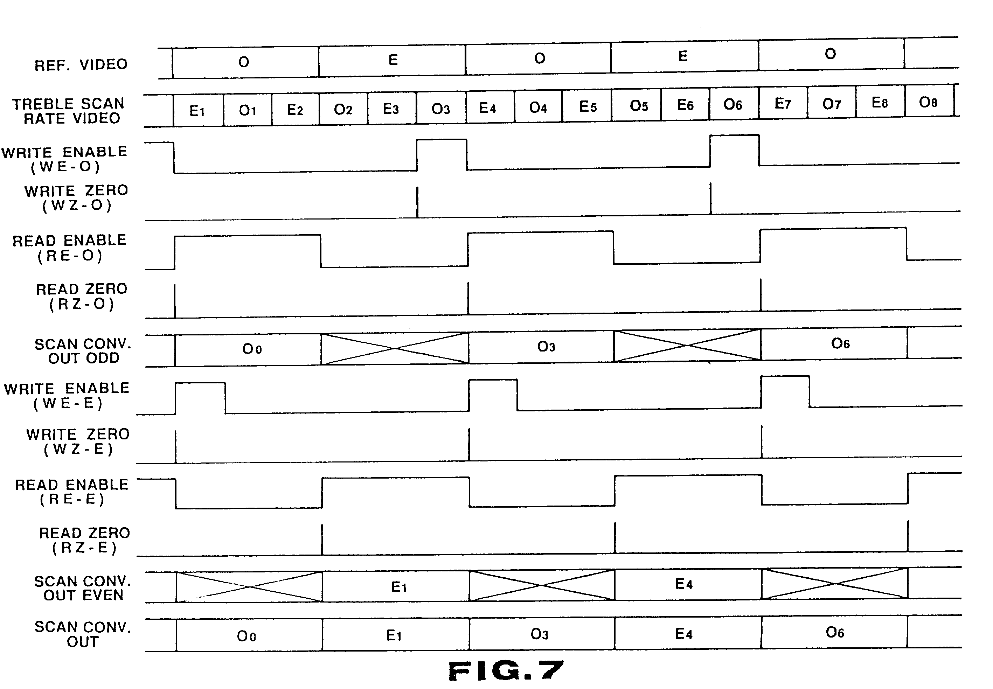

A second scanning rate converter will now be described with reference to Figures 6 and 7.

The scanning rate converter shown in Figure 6 is arranged to convert a treble scanning rate television signal provided as the image pickup output of a treble scanning rate television camera to a scanning rate of the standard television system. The converter includes a first signal input terminal 31 to which is supplied the treble scanning rate television signal (VIDEO_{IN}), and a second signal input terminal 32 to which is supplied a basic scanning rate reference television signal (REF.VIDEO_{IN}).

In this scanning rate converter, the treble scanning rate television signal (VIDEO_{IN}) supplied to the first signal input terminal 31 is supplied to an analogue/digital (A/D) converter 34 via a low-pass filter 33 for preventing aliasing distortion. Odd and even field data (DATA) of the treble scanning rate television signal digitised by the A/D converter 34 is written into an odd field memory 36 and an even field memory 37 under the control of write control and readout control signals supplied by a memory controller 35.

The basic scanning rate reference television signal (REF.VIDEO_{IN}) supplied to the second signal input terminal 32 is delivered to a synchronous separation circuit 38 which extracts a reference synchronising signal (REF.SYNC). The reference synchronising signal (REF.SYNC) extracted by the synchronous separation circuit 38 is supplied to the memory controller 35, and is also supplied to a phase comparator 40 via a half H killer circuit 39. The phase comparator 40 is supplied with a signal (REF.H) obtained by frequency-dividing an oscillating output of a voltage controlled oscillator (VCO) 41 using a frequency divider 42, and serves to carry out phase comparison between the signal (REF.H) and a horizontal synchronising signal (HSYNC) supplied by the half H killer circuit 39 to control the oscillation phase of the VCO 41 by means of a phase comparison output. Here, the phase comparator 40, the VCO 41 and the frequency divider 42 constitute a well known phase locked loop (PLL).

The VCO 41 oscillates at a frequency of 3xMxf_{H} where M represents the number of samples within one horizontal scanning period of the treble scanning rate television signal (VIDEO_{IN}) , and f_{H} represents the horizontal scanning frequency. The frequency-divider 42 frequency-divides the oscillating output of the VCO 41 by (3xM) thereby to form a signal (REF.H) of the horizontal scanning frequency f_{H}. The oscillating output of the VCO 41 is phase-locked to the horizontal synchronising signal (HSYNC) of the reference television signal (REF.VIDEO_{IN}) by the operation of the PLL. The oscillating output having the frequency of 3xMxf_{H} obtained by the VCO 41 is supplied, as a write clock signal WCK, to the memory controller 35, the A/D converter 34, and the field memories 36, 37. Further, the signal (REF.H) of the horizontal frequency f_{H} derived by the frequency-divider 42 is also delivered to the memory controller 35.

Here, 858 is adopted in the case of the NTSC system as the number of samples M within one horizontal scanning period of the treble scanning rate television signal (VIDEO_{IN}), and 864 is adopted in the case of the PAL system.

The memory controller 35 generates various control pulses (WE-O, WE-E, WZ-O, WZ-E), for write control and various control pulses (RE-O, RE-E, RZ-O, RZ-E, RCK) for readout control of the field memories 36 and 37, as shown in Figure 7, on the basis of the reference synchronising signal (REF.SYNC), the write clock (WCK) and the signal (REF.H) of the horizontal scanning frequency f_{H}.

The write enable pulses (WE-O, WE-E) of the various control pulses control a write operation of data. The write enable pulse (WE-O) is placed in the state of logic "H" for a time period corresponding to odd fields (O₀, O₃, O₆...) of the treble scanning rate television signal (VIDEO) existing at the ends of respective even fields E of the reference television signal (REF.VIDEO). Further, the write enable pulse (WE-E) is placed in the state of logic "H" for a time period corresponding to even fields (E₁, E₄, E₇...) of the treble scanning rate television signal (VIDEO) existing at the beginning of respective odd fields 0 of the reference television signal (REF.VIDEO). The write zero pulses (WZ-O, WZ-E) indicate the leading positions of write addresses of data written by the write enable pulses (WE-O, WE-E).

The read enable pulses (RE-O, RE-E) of the various control pulses control readout of data. The read enable pulse (RE-O) is placed in the state of logic "H" corresponding to respective odd fields 0 of the reference television signal (REF.VIDEO). Further, the read enable pulse (RE-E) is placed in the state of logic "H" corresponding to respective even fields (E) of the reference television signal (REF.VIDEO). Furthermore, the read zero pulses (RZ-O, RZ-E) of the various control pulses indicate the leading positions of readout addresses of data read out by the read enable pulses (RE-O, RE-E). In addition, the readout clock (RCK) corresponds to 1/3 of the clock rate of the write clock.

Data write/read operation of the field memory 36 for odd fields is as follows. Under write control and readout control of data by the control pulses (WE-O, WZ-O) for write control and the control pulses (RE-O, RZ-O) for readout control, data of odd fields (O₀, O₃, O₆...) of the treble scanning rate television signal (VIDEO) existing at the ends of respective even fields E of the reference television signal (REF.VIDEO) are written into the field memory 36, and data of these odd fields (O₀, O₃, O₆...) are read out from the field memory 36 with the time base being expanded for the duration of respective odd fields 0 of the reference television signal (REF.VIDEO). The data thus read out is delivered as scanning rate converted odd field data (CONV.OUT_{ODD}) to a digital/analogue (D/A) converter 44 via a changeover switch 43.

Data write/read operation of the field memory 37 for even fields is as follows. Under write control and readout control by the control pulses (WE-E, WZ-E) for write control and the control pulses (RE-E, RZ-E) for readout control, data of even fields (E₁, E₄, E₇...) of the treble scanning rate television signal (REF.VIDEO) existing at the beginning of respective odd fields 0 of the reference television signal (REF.VIDEO) is written into the field memory 37, and data of these even fields (E₁, E₄, E₇...) are read out from the field memory 37 with the time base being expanded for the duration of respective even fields E of the reference television signal (REF.VIDEO). The data thus read out is delivered as scanning rate converted even field data (CONV.OUT_{EVEN}) to the D/A converter 44 via the changeover switch 43.

The D/A converter 44 converts scanning rate converted odd field data (CONV.OUT_{ODD}) and even field data (CONV.OUT_{EVEN}) sequentially delivered through the changeover switch 34 to data in analogue form to supply a scanning rate converted television signal (VIDEO_{OUT}) to an output terminal 45 via an interpolating low-pass filter 44.

In the scanning rate converter described above, a technique is employed to expand the time base of signals of even fields and odd fields of a high speed television signal positioned across the boundary between even fields and odd fields of a television signal having a reference frequency, thereby to generate a television signal of the reference frequency. Thus, odd fields and even fields constituting respective frames are successive in time, resulting in reduced step-like motion in the resulting moving picture.

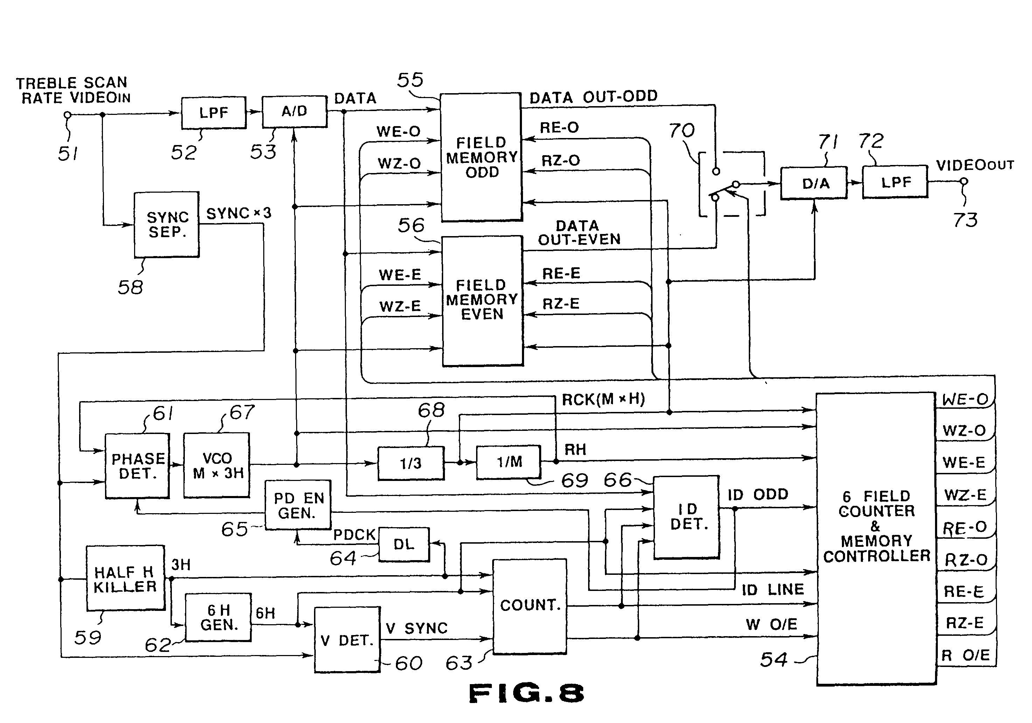

A scanning rate converter embodying the invention will now be described with reference to Figures 8 to 11.

The scanning rate converter shown in Figure 8 is arranged to convert a treble scanning rate television signal provided as the image pickup output of a television camera of the treble scanning rate type to a scanning rate of the standard television system. The treble scanning rate television signal (VIDEO_{IN}) is delivered to a signal input terminal.

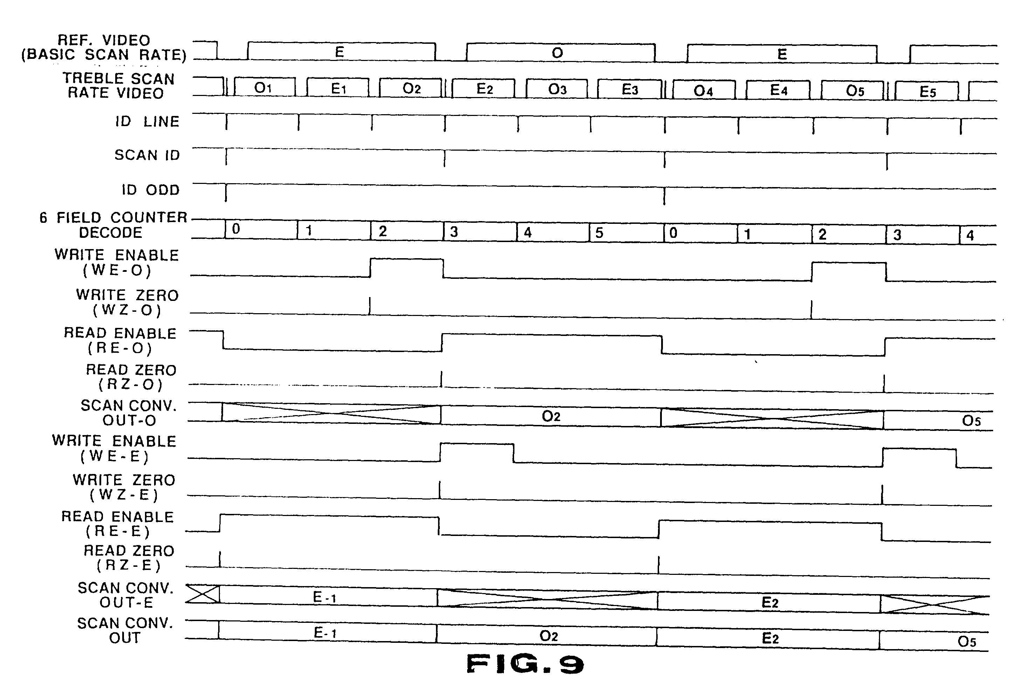

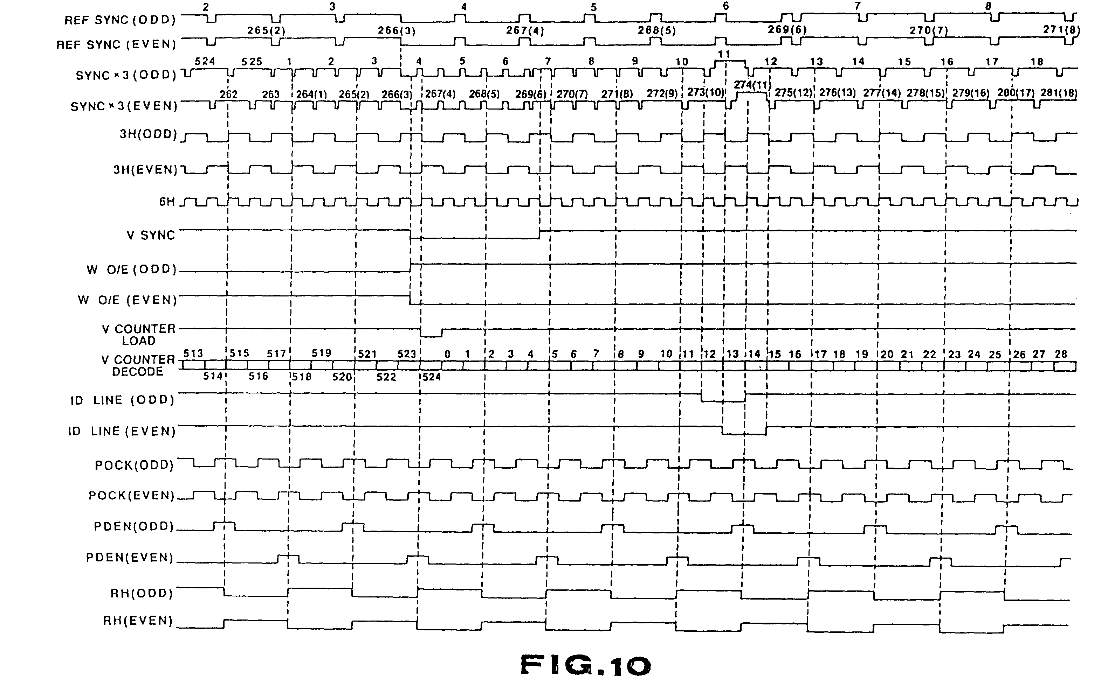

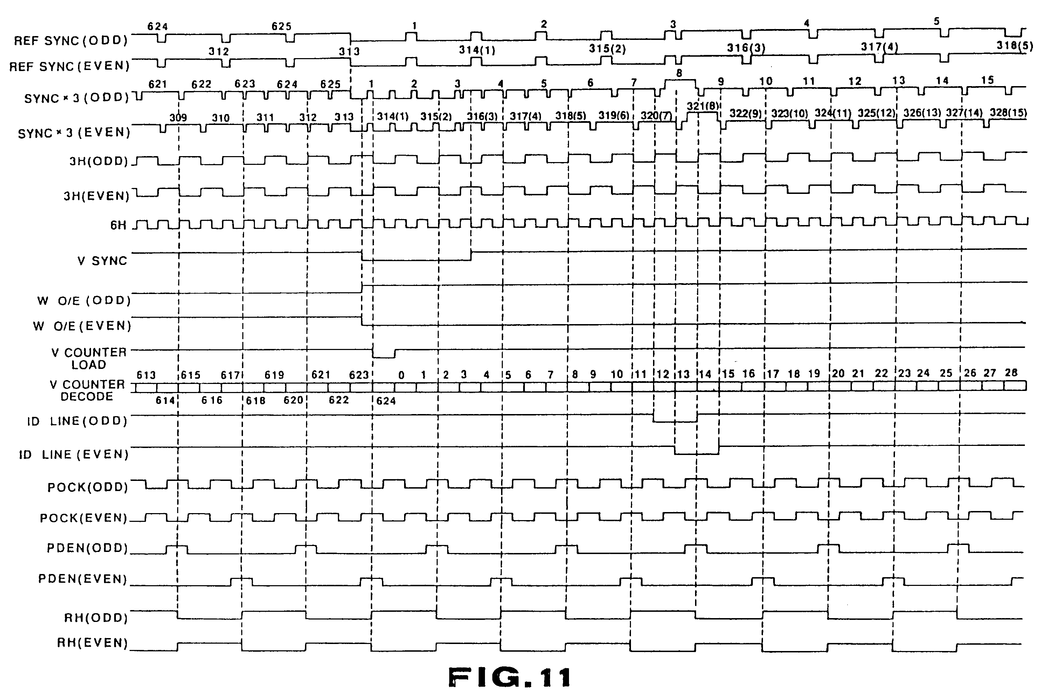

In the treble scanning rate television signal (VIDEO_{IN}), as shown in Figure 9, marker signals (SCAN ID) in which a specific line within a vertical blanking period is caused to be taken as a white level of 100% are inserted once every three fields. The position of the marker signal (SCAN ID) is as follows. For example, in the case of a 525 line system such as the NTSC system, the marker signal is inserted, eg at the 11th line of odd fields and the 274th line of even fields as shown in Figure 10. In the case of a 625 line system such as the PAL system, the marker signal is inserted, for example, at the 8th line of odd fields and the 321st line of even fields as shown in Figure 11.

In this scanning rate converter, the treble scanning rate television signal (VIDEO_{IN}) supplied to the signal input terminal 51 is supplied to an analogue/digital (A/D) converter 53 via a low-pass filter 52 for preventing aliasing distortion. Odd and even field data (DATA) of the treble scanning rate television signal digitised by the A/D converter 53 is written into an odd field memory 55 and an even field memory 56 under the control of write control and readout control signals supplied by a memory controller 54.

The treble scanning rate television signal (VIDEO_{IN}) supplied to the signal input terminal 51 is also supplied to a synchronous separation circuit 58, by which a treble scanning rate synchronising signal (SYNCx3) is extracted. The treble scanning rate synchronising signal (SYNCx3) extracted by the synchronous separation circuit 58 is delivered to a half H killer circuit 59, a vertical synchronisation detector 60, and a phase comparator 61.

The half H killer circuit 59 removes an equivalent pulse at the vertical synchronisation portion of the treble scanning rate synchronising signal (SYNCx3) to form a 3H pulse having a duty factor of substantially 50%. The 3H pulse obtained from the half H killer circuit 59 is delivered to a 6H pulse generator 62 and a V counter 63, and is also delivered to a comparative control signal generator 65 via a delay circuit 64.

The 6H pulse generator 62 forms a 6H pulse having a duty factor of substantially 50% with the phase of the 3H pulse as a reference. The 6H pulse obtained by the 6H pulse generator 62 is supplied to the memory controller 54, the vertical synchronisation detector 60, the V counter 63, and also a marker detector 66.

The vertical synchronisation detector 60 latches the treble scanning rate synchronising signal (SYNCx3) at a falling edge of the 6H pulse thereby to detect vertical synchronisation and output a vertical synchronising signal (VSYNC). The vertical synchronising signal (VSYNC) obtained by the vertical synchronisation detector 60 is delivered to the V counter 63.

The V counter 63 is a counter using the 6H pulse as a clock. This counter is reset by the phase of the vertical synchronisation signal (VSYNC), and circulates when the count value reaches 525 or 625. The V counter 63 latches the 3H pulse at a falling edge of the vertical synchronising signal (VSYNC) thereby to detect odd fields and even fields of the treble scanning rate television signal (VIDEO_{IN}) and generate a field discrimination pulse (WO/E). Further, this V counter 63 selects a count value of the 6H pulse to form a pulse (ID LINE) indicating the insertion line of the marker signal (ID). The field discrimination pulse (W O/E) and the marker insertion line pulse (ID LINE) are delivered to the memory controller 54 and the marker detector 66.

The marker detector 66 detects a marker insertion line of odd fields from the most significant bit (MSB) of data (DATA) of the treble scanning rate television signal digitised by the A/D converter 53, the field discrimination pulse W O/E and the marker insertion line pulse (ID LINE). Since the marker signal is constituted with white level of 100%, the most significant bit (MSB) of the data (DATA) represents logic "H". The marker detection pulse (ID ODD) by the marker detector 66 is delivered to the memory controller 54 and the comparative control signal generator 65.

Further, the 3H pulse obtained from the half H killer circuit 59 is delayed by means of the delay circuit 64 to such a phase as to include the falling edge portion of HSYNC of the treble scanning rate synchronising signal (SYNCx3) by logic "H", and is then delivered to the comparative control signal generator 65 as a clock pulse (PDCK).

The comparative control signal generator 65 frequency-divides the clock pulse (PDCK) by 3 to form a phase comparative control signal (PD EN) once every three lines with respect to a falling edge of (HSYNC) of the treble scanning rate synchronising signal (SYNCx3). It is to be noted that the operation of frequency-dividing the clock pulse (PDCK) by 3 in the comparative control signal generator 65 is reset once every six fields by a marker detection pulse (ID ODD) by the marker detector 46. Thus, the phase is uniquely fixed.

The phase comparator 61 is supplied with a signal (RH) obtained by frequency-dividing the oscillating output of a voltage controlled oscillator (VCO) 67 using frequency-dividers 68, 69, and carries out a phase comparison between this signal RH and the treble scanning rate synchronising signal (SYNCx3) delivered from the synchronous separation circuit 58 to control the oscillation phase of the VCO 67 by means of a phase comparison output. Here, the phase comparator 61, the VCO 67, and the frequency-dividers 68 and 69 constitute a phase locked loop (PLL).

In the PLL, the phase comparison is limited to a specific HSYNC once every three lines of the treble scanning rate synchronisation signal (SYNCx3), and it is therefore possible to determine uniquely the phase of the signal RH, ie the H phase of the scanning rate converted output.

The VCO 67 oscillates at a frequency of 3xMxf_{H} where M represents the number of samples within one horizontal scanning period of the treble scanning rate television signal (VIDEO_{IN}) and f_{H} represents the horizontal scanning frequency. The frequency divider 68 frequency-divides the oscillating output of the VCO 67 by 3, and the frequency-divider 69 further frequency-divides the frequency-divided output of the frequency-divider 68 by M. The oscillating output of the VCO 67 is phase-locked to the treble scanning rate synchronising signal SYNCx3 by the operation of the PLL. The oscillating output of the VCO 67 having the frequency of 3xMxf_{H} is delivered, as a write clock WCK (Mx3H), to the A/D converter 53, the memory controller 54, and the field memories 55, 56. Further, the frequency-divided output of the frequency-divider 68 is supplied, as a readout clock RCK (MxH), to the memory controller 54 and the field memories 55, 56.

Here, 858 is adopted in the case of the NTSC system as the number of samples within one horizontal scanning period of the treble scanning rate television signal, and 864 is adopted in the case of the PAL system.

The memory controller 54 generates various control pulses (WE-O, WE-E, WZ-O, WZ-E) for write control and various control pulses (RE-O, RE-E, RZ-O, RZ-E, R O/E) for readout control of the field memories 55, 56, as shown in Figure 9, on the basis of WCK (Mx3H), RCK (MxH), RH, ID ODD, ID LINE, W O/E, etc.

The write enable pulses (WE-O, WE-E) of the various control pulses control a write operation of data. The write enable pulse (WE-O) is placed in the state of logic "H" for a time period corresponding to odd fields (O₂, O₅...) of the treble scanning rate television signal (VIDEO) existing at the ends of respective even fields E of the reference television signal (REF.VIDEO). Further, the write enable pulse (WE-E) is placed in the state of logic "H" for a time period corresponding to even fields (E₂, E₅, E₈...) of the treble scanning rate television signal (VIDEO) existing at the beginning of respective odd fields O of the reference television signal (REF.VIDEO). The write zero pulses (WZ-O, WZ-E) indicate the leading positions of write addresses of data written by the write enable pulses (WE-O, WE-E).

The read enable pulses (RE-O. RE-E) of the various control pulses control readout of data. The read enable pulse (RE-O) is placed in the state of logic "H" for a time period corresponding to respective odd fields 0 of the reference television signal (REF.VIDEO). Further, the read enable pulse (RE-E) is placed in the state of logic "H" for a time period corresponding to respective even fields of the reference television signal (REF.VIDEO). The read zero pulses (RZ-O, RZ-E) indicate the leading positions of readout addresses of data read out by the read enable pulses (RE-O, RE-E). In addition, the readout clock (R O/E) designates odd fields and even fields on the readout side, and is used as a control signal for a changeover switch 70.

Data write/read operation of the field memory 55 for odd fields is as follows. Under write control and readout control of data by the control pulses (WE-O, WZ-O) for write control and the control pulses (RE-O, RZ-O) for readout control, data of odd fields (O₂, O₅...) of the treble scanning rate television signal (VIDEO) existing at the ends of respective even fields E of the reference television signal (REF.VIDEO) is written into the field memory 55, and data of these odd fields (O₂, O₅...) is read out from the field memory 55 with the time base being expanded for the duration of respective odd fields O of the reference television signal (REF.VIDEO). The data thus read out is delivered as scanning rate converted odd field data (CONV.OUT_{ODD}) to the digital/analogue (D/A) converter 71 via the changeover switch 70.

Data write/read operation of the field memory 56 for even fields is as follows. Under write control and readout control of data by the control pulses (WE-E, WZ-E) for write control and the control pulses (RE-E, RZ-E) for readout control, data of even fields (E₂, E₅...) of the treble scanning rate television signal (VIDEO) existing at the beginning of respective odd fields (0) of the reference television signal (REF.VIDEO) is written into the field memory 56, and data of these even fields (E₂, E₅...) is read out from the field memory 56 with the time base being expanded for the duration of respective even fields E of the reference television signal (REF.VIDEO). The data thus read out is delivered as scanning rate converted even field data (CONV.OUT_{EVEN}) to the D/A converter 71 via the changeover switch 70.

The D/A converter 71 converts scanning rate converted odd field data (CONV.OUT_{ODD}) and even field data (CONV.OUT_{EVEN}) sequentially delivered through the changeover switch 70 to data in analogue form to supply a scanning rate converted television signal (VIDEO_{OUT}) to an output terminal 73 via an interpolating low-pass filter 72.

Since the scanning rate converted television signal (VIDEO_{OUT}) obtained at the output terminal 73 is a signal obtained by expanding the time base of data of two successive fields (O₂, E₂ . O₅, E₅...) of the treble scanning rate television signal (VIDEO), data of odd fields and data of even fields constituting respective frames are successive in time, resulting in a less step-like moving picture.

Thus, in the scanning rate converter described above, an approach is employed to generate, on the basis of a marker signal generated at the scanning rate of a standard television signal and inserted in a television signal having a scanning rate which is an odd number (N) times greater than that of the standard television signal, a television signal having a scanning rate equal to the N-tuple scanning rate. Thus, it is possible to form a television signal synchronous with the marker signal by carrying out scanning rate conversion without providing an input terminal for the standard television signal for external synchronisation. Accordingly, since the number of external connections can be reduced by one, the entire arrangement can be simplified.

## Claims

1. A method of converting a high speed television signal having a field frequency N times greater than that of a standard television signal, where N is an integer, the method comprising:
controlling write and read operations of a memory (55, 56) to select odd fields and even fields of the high speed television signal corresponding to respective intervals of even fields and odd fields of said standard television signal, the total number of odd fields and even fields of the high speed television signal corresponding to each said interval being equal to N, and to expand the time base of the selected even fields and odd fields of said high speed television signal to generate a television signal having the field frequency of said standard television signal;
characterised by:
detecting a marker signal (SCAN ID) generated at the field frequency of the standard television signal and inserted in the high speed television signal; and
generating memory control signals on the basis of the detected marker signal (SCAN ID) to control said write and read operations of the memory (55, 56).

2. A method as claimed in claim 1, wherein said marker signal (SCAN ID) has a white level of 100%.

3. A method as claimed in claim 1 or claim 2, wherein said marker signal (SCAN ID) is inserted at a position corresponding to a vertical retrace interval of said standard television signal.

4. A method as claimed in any one of claims 1 to 3, wherein N is an odd number and wherein the selected odd fields and even fields are positioned across the boundary between the even fields and odd fields of said standard television signal.

5. A method as claimed in any preceding claim, wherein N is equal to 3.

6. A scanning rate converter for converting a high speed television signal having a field frequency N times greater than that of a standard television signal, where N is an integer, the scanning rate converter comprising:
a memory (55, 56); and
a memory controller (54) for controlling write and read operations of the memory (55, 56) to select odd fields and even fields of the high speed television signal corresponding to respective intervals of even fields and odd fields of said standard television signal, the total number of odd fields and even fields of the high speed television signal corresponding to each said interval being equal to N, and to expand the time base of the selected even fields and odd fields of said high speed television signal to generate a television signal having the field frequency of said standard television signal;
characterised by means (63, 66) for detecting a marker signal (SCAN ID) generated at the field frequency of the standard television signal and inserted in the high speed television signal, wherein the memory controller (54) is arranged to generate memory control signals on the basis of the detected marker signal (SCAN ID) to control said write and read operations of the memory (55, 56).

## Patentansprüche

1. Verfahren zur Umwandlung eines Hochgeschwindigkeits-Fernsehsignals mit einer Halbbildfrequenz, die N-mal größer als die eines Standard-Fernsehsignals ist, wobei N eine ganze Zahl ist, mit
einer Steuerung eines Schreib- und/oder Lesebetriebs eines Speichers (55, 56) zum Wählen von mit jeweiligen Intervallen geradzahliger Halbbilder und ungeradzahliger Halbbilder des Standard-Fernsehsignals korrespondierenden ungeradzahligen Halbbildern und geradzahligen Halbbildern des Hochgeschwindigkeits-Fernsehsignals, wobei die mit jedem Intervall korrespondierende Gesamtzahl ungeradzahliger Halbbilder und geradzahliger Halbbilder des Hochgeschwindigkeits-Fernsehsignals gleich N ist, und zum Expandieren der Zeitbasis der gewählten geradzahligen Halbbilder und ungeradzahligen Halbbilder des Hochgeschwindigkeits-Fernsehsignals zur Erzeugung eines Fernsehsignals mit der Halbbildfrequenz des Standard-Fernsehsignals,
gekennzeichnet durch:
Detektieren eines bei der Halbbildfrequenz des Standard-Fernsehsignals erzeugten und in das Hochgeschwindigkeits-Fernsehsignal eingesetzten Markierungssignals (SCAN ID), und
Erzeugen von Speichersteuersignalen auf der Basis des detektierten Markierungssignals (SCAN ID) zur Steuerung des Schreib- und/oder Lesebetriebs des Speichers (55, 56).

2. Verfahren nach Anspruch 1, wobei das Markierungssignal (SCAN ID) einen Weißpegel von 100 % aufweist.

3. Verfahren nach Anspruch 1 oder 2, wobei das Markierungssignal (SCAN ID) in eine mit einem vertikalen Rücklaufintervall des Standard-Fernsehsignals korrespondierende Position eingesetzt ist.

4. Verfahren nach einem der Ansprüche 1 bis 3, wobei N eine ungerade Zahl ist, und wobei die gewählten ungeradzahligen Halbbilder und geradzahligen Halbbilder über der Grenze zwischen den geradzahligen Halbbildern und ungeradzahligen Halbbildern des Standard-Fernsehsignals positioniert sind.

5. Verfahren nach einem der vorhergehenden Ansprüche, wobei N gleich 3 ist.

6. Abtastratenumwandler zur Umwandlung eines Hochgeschwindigkeits-Fernsehsignals mit einer Halbbildfrequenz, die N-mal größer als die eines Standard-Fernsehsignals ist, wobei N eine ganze Zahl ist,
mit einem Speicher (55, 56), und
einem Speicherregler zur Steuerung eines Schreib- und/oder Lesebetriebs des Speichers (55, 56) zum Wählen von mit jeweiligen Intervallen geradzahliger Halbbilder und ungeradzahliger Halbbilder des Standard-Fernsehsignals korrespondierenden ungeradzahligen Halbbildern und geradzahligen Halbbildern des Hochgeschwindigkeits-Fernsehsignals, wobei die mit jedem Intervall korrespondierende Gesamtzahl ungeradzahliger Halbbilder und geradzahliger Halbbilder des Hochgeschwindigkeits-Fernsehsignals gleich N ist, und zum Expandieren der Zeitbasis der gewählten geradzahligen Halbbilder und ungeradzahligen Halbbilder des Hochgeschwindigkeits-Fernsehsignals zur Erzeugung eines Fernsehsignals mit der Halbbildfrequenz des Standard-Fernsehsignals,
gekennzeichnet durch eine Einrichtung (63, 66) zum Detektieren eines bei der Halbbildfrequenz des Standard-Fernsehsignals erzeugten und in das Hochgeschwindigkeits-Fernsehsignal eingesetzten Markierungssignals (SCAN ID), wobei der Speicherregler (54) so ausgebildet ist, daß er Speichersteuersignale auf der Basis des detektierten Markierungssignals (SCAN ID) zur Steuerung des Schreib- und/oder Lesebetriebs des Speichers (55, 56) erzeugt.

## Revendications

1. Procédé de conversion d'un signal de télévision à vitesse élevée ayant une fréquence d'image N fois plus grande que celle d'un signal de télévision standard, où N est un entier, le procédé comprenant :
des opérations d'écriture et de lecture de commande d'une mémoire (55, 56) pour sélectionner des images impaires et des images paires du signal de télévision à vitesse élevée correspondant à des intervalles respectifs des images paires et des images impaires dudit signal de télévision standard, le nombre total d'images impaires et d'images paires du signal de télévision à vitesse élevée correspondant à chaque dit intervalle étant égal à N, et pour dilater la base de temps des images paires et des images impaires sélectionnées dudit signal de télévision à vitesse élevée pour générer un signal de télévision ayant la fréquence d'image dudit signal de télévision standard ;
caractérisé par :
la détection d'un signal de marqueur (SCAN ID) généré à la fréquence d'image du signal de télévision standard et inséré dans le signal de télévision à vitesse élevée ; et
la génération des signaux de commande de mémoire sur la base du signal de marqueur détecté (SCAN ID) pour commander lesdites opérations d'écriture et de lecture de mémoire (55, 56).

2. Procédé selon la revendication 1, dans lequel ledit signal de marqueur (SCAN ID) a un niveau de blanc de 100%.

3. Procédé selon la revendication 1 ou la revendication 2, dans lequel ledit signal de marqueur (SCAN ID) est inséré à une position correspondant à un intervalle de suppression vertical dudit signal de télévision standard.

4. Procédé selon l'une quelconque des revendications 1 à 3, dans lequel N est un nombre impair et où les images impaires et les images paires sélectionnées sont positionnées à travers la limite entre les images paires et les images impaires dudit signal de télévision standard.

5. Procédé selon l'une quelconque des revendications précédentes, dans lequel N est égal à trois.

6. Convertisseur de rythme de balayage pour convertir un signal de télévision de vitesse élevée ayant une fréquence d'image N fois plus grande que celle d'un signal de télévision standard, où N est un entier, le convertisseur de rythme de balayage comprenant :
une mémoire (55, 56) ; et
un dispositif de commande de mémoire (54) pour commander les opérations d'écriture et de lecture de mémoire (55, 56) pour sélectionner des images impaires et des images paires du signal de télévision à vitesse élevée correspondant à des intervalles respectifs des images paires et des images impaires dudit signal de télévision standard, le nombre total d'images impaires et d'images paires du signal de télévision de vitesse élevée correspondant à chacun dudit intervalle étant égal à N, et pour dilater la base de temps des images paires et des images impaires sélectionnées dudit signal de télévision à haute vitesse pour générer un signal de télévision ayant une fréquence d'image dudit signal de télévision standard ;
caractérisé par un moyen (63, 66) pour détecter un signal de marqueur (SCAN ID) généré à la fréquence d'image dudit signal de télévision standard et insérée dans le signal de télévision à vitesse élevée, où le dispositif de commande de mémoire (54) est disposé pour générer des signaux de commande de mémoire sur la base du signal de marqueur détecté (SCAN ID) pour commander lesdites opérations d'écriture et de lecture de la mémoire (55, 56).
